# EUROPEAN PATENT SPECIFICATION

(11) **EP 2 505 867 B1**
(45) Date of publication and mention of the grant of the patent: **13.11.2013**
(21) Application number: 12161029.9
(22) Date of filing: 23.03.2012
(51) Int. Cl.: F16D 55/08, F16D 67/02

(54) **Vehicle with a braking system**
Fahrzeugbremssystem
Systeme de freinage d'un vehicule

(30) Priority: 30.03.2011 NL 2006492
(43) Date of publication of application: 03.10.2012
(73) Proprietor: Van Ee, Teunis Karel, 3771 MB Barneveld (NL)
(72) Inventor: Van Ee, Teunis Karel, 3771 MB Barneveld (NL)
(74) Representative: Peters, Sebastian Martinus

(56) References cited:
- EP-A1- 1 691 101
- DE-A1-102007 010 322
- US-B1- 6 666 307

## Description

### BACKGROUND OF THE INVENTION

The invention relates to a vehicle with a braking system, such as a go-kart or a paddle car.

A state of the art paddle car brake is described in DE 10 2007 010 322 A1.

A known go-kart is provided with a chassis, two wheels with rubber pneumatic tyres bearing mounted on a common rotation centre line on either side of the chassis and a drive that drives one of the wheels. The wheels are able to rotate independently of each other, so that when negotiating a bend the wheel on the inside of the bend is able to rotate more slowly than the wheel on the outside of the bend. The independently rotating wheels each have to be decelerated separately. For that purpose the go-kart comprises a braking body per wheel, which body in the braking position presses on the tread of the tyre. The braking bodies are rigidly connected to each other by a brake rod extending over substantially the full distance between both wheels. The go-kart is furthermore provided with a brake lever connected to the brake rod and extending within reach of the driver. The brake rod transmits the motion of the brake lever to the braking bodies situated on either side of the go-kart.

A drawback of the known brake rod is that it extends in the transverse direction over substantially the full distance between the wheels and may thus interfere with the drive. Moreover most go-karts are provided with a seat placed in the middle of the chassis, which seat can be shifted over the chassis in the longitudinal direction. The brake rod may also be located in the path of the seat, as a result of which the adjustment range of the seat is restricted to the position in which the brake rod extends transverse over the chassis.

It is an object of the invention to provide a vehicle with a compact braking system.

### SUMMARY OF THE INVENTION

According to a first aspect the invention provides a vehicle comprising a first wheel, a second wheel, a chassis, a braking system fixedly connected to the chassis and a drive situated between the first wheel and the second wheel for driving the second wheel, wherein the first wheel and the second wheel are bearing mounted to the chassis so as to be rotatable about a common rotation centre line, wherein the first wheel is provided with a first hub and a first brake disc rotation-fixedly coupled to the first hub, wherein the second wheel is provided with a second hub and a second brake disc rotation-fixedly coupled to the second hub, wherein the braking system is provided with brake pads which in a first position are substantially free from the brake discs in order to allow rotations of the brake discs, wherein in a second position the brake pads clampingly engage onto the first brake disc and the second brake disc in order to slow down the rotations of the brake discs with respect to the chassis, wherein the first brake disc and the second brake disc are both situated on one side of the drive. A compact braking system will therefore suffice which contrary to the known go-kart according to the state of the art need not extend over the full distance between the first wheel and the second wheel. Instead the braking system only extends on one side of the drive and at that location engages onto both brake discs.

In one embodiment the first brake disc and the second brake disc are both situated on the side of the drive that faces away from the second wheel. The distance between the drive and the second wheel to be driven can thus be kept short. Moreover the brake discs are situated on the opposite side of the drive with respect to the second wheel as a result of which the brake discs do not hinder the coupling of the drive to the second wheel. The coupling between the drive and the second wheel to be driven can thus easily be realised.

In one embodiment the first brake disc and the second brake disc are situated next to each other. By placing the brake discs next to each other a compact braking system will suffice.

In one embodiment the first brake disc and the second brake disc are directly consecutive to each other. As there are no parts in between the brake discs, the brake discs can be placed very close to each other, which may result in a more compact braking system.

In one embodiment the first wheel and the second wheel define a mutual track width, wherein the brake disc distance is at least three times smaller, preferably at least five times smaller and most preferably at least ten times smaller than the track width. A compact braking system adapted to engage onto brake discs placed at a distance of one-third of the track width or less from each other will therefore suffice.

In one embodiment the brake disc distance preferably is smaller than one centimetre. A compact braking system that is adapted for engaging onto brake discs placed at a distance of one centimetre or less from each other will therefore suffice.

In one embodiment the braking system comprises a brake calliper, wherein the brake pads are spaced apart from one another within the brake calliper, wherein the first brake disc and the second brake disc are situated between the brake pads. Both brake discs can be clamped between the brake pads of the same brake calliper.

In one embodiment, in the second position, the first brake pad clampingly abuts the side of the first brake disc, which side faces away from the second brake disc, and wherein in the second position, the second brake pad clampingly abuts the side of the second brake disc, which side faces away from the first brake disc. Both brake discs can be clamped between the brake pads of the same brake calliper. Eliminating a brake calliper may result in a more compact braking system.

In one embodiment, on the sides that face away from the brake pads, the brake discs are in mutual clamping abutment. The sides of the brake discs that face away from the brake pads are decelerated with respect to each other as a result of the mutual abutting clamping contact. In case of sufficient mutual resistance the brake discs can act like a brake disc assembly connected by frictional resistance, which assembly on the sides facing the brake pads can be decelerated by means of two brake pads. Brake discs usually are decelerated by means of two brake pads, one per side of the brake disc. In the vehicle according to the invention two brake pads can be saved on, as the two brake discs can be decelerated simultaneously as brake disc assembly between two brake pads.

In one embodiment the first brake disc and the second brake disc are placed in a group in the middle between the two wheels. If the first wheel and the second wheel are the front wheels of the vehicle, the control element of the braking system can easily be brought from the front of the vehicle past the steering column within reach of the driver, for instance by means of a brake lever next the steering wheel.

In one embodiment the first brake disc and the second brake disc are situated in a group in the area between the middle between the two wheels and the first hub. By placing the brake discs in a group beyond the middle between the two wheels of the vehicle, the control element connected to the braking system can extend directly upwards past the seat to within reach of the driver, without contacting the seat in the middle of the vehicle.

In one embodiment the first brake disc and the second brake disc are situated at a short distance from the first hub. By placing the brake discs in a group far beyond the middle between the two wheels of the vehicle, the control element connected to the braking system can extend directly upwards past the seat to within reach of the driver, without contacting the seat in the middle of the vehicle.

In one embodiment the second wheel comprises a shaft that is rotation-fixedly connected to the second hub, which shaft, considered from the second hub, extends past halfway the track width, wherein the second brake disc is rotation-fixedly connected to the shaft at a distance from the first hub that is smaller than the distance to the second hub.

In one embodiment the shaft extends from the second hub to the first wheel, wherein the first wheel is bearing mounted to the shaft. The shaft of the second wheel is able to support the first wheel, as a result of which the second wheel need not be bearing mounted separately to the chassis.

In one embodiment the first brake disc is provided with a concentric recess with a bearing in there for bearing mounting the first brake disc to the shaft. The shaft of the second wheel is able to support the first wheel, as a result of which the second wheel need not be bearing mounted separately to the chassis.

In one embodiment the vehicle comprises a drive that is operationally connected to the second wheel for driving the second wheel. A vehicle, particularly a go-kart, moving at low speed, does not necessarily need a drive on several wheels.

In one embodiment in the condition in which the braking system is not slowing down, the first wheel and the second wheel are independently rotatable with respect to each other. In that way the vehicle can easily negotiate bends, wherein the wheel on the outside of the bend will rotate faster than the wheel on the inside of the bend.

In one embodiment the vehicle has at least three wheels. The third wheel spaced apart from the first wheel and the second wheel is able to provide extra stability of the vehicle.

In one embodiment the vehicle is a go-kart or a pedal car. Due to their independently rotating wheels and the pedal drive, a go-kart or pedal car are particularly suitable for the braking system according to the invention. The wheels can be decelerated simultaneously and centrally by the braking system, without the pedal drive being hindered by the presence of a brake rod according to the state of the art.

In one embodiment the device is a children's vehicle. The forces and speeds the children's vehicle is subjected to are low to such a degree that a simple, compact braking system according to the invention will suffice for safely decelerating the wheels.

According to a second aspect the invention provides a braking system, apparently suitable for use in a vehicle as described above.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows a rear view in perspective of a go-kart having a braking system according to an embodiment of the invention;
figure 2 shows a view of the braking system according to circle II in figure 1;
figure 3 shows a view of the braking system according to figure 2 in disassembled condition;
figure 4 shows a view in cross-section of the braking system according to the line IV-IV in figure 2; and
figure 5 shows a rear view in perspective of a go-kart having a braking system according to an alternative embodiment of the invention.

### DETAILED DESCRIPTION OF THE DRAWINGS

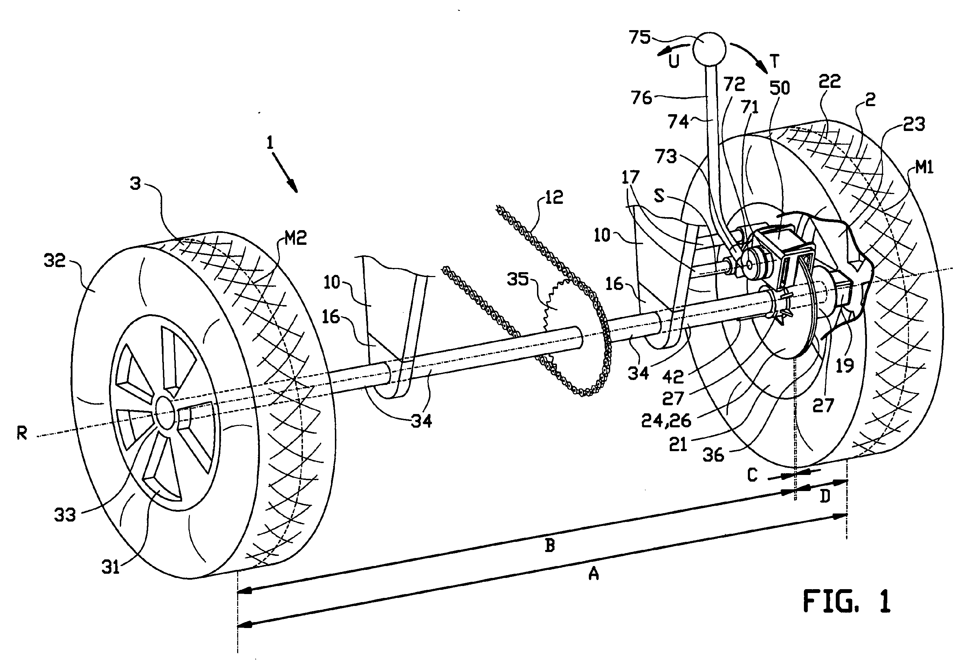

Figure 1 shows the rear of a vehicle, particularly go-kart 1, having a braking system 5 according to an embodiment of the invention. The go-kart 1 comprises a chassis 10 having four wheels bearing mounted to the chassis 10, of which only the first wheel 2 and the second wheel 3 at the rear of the go-kart 1 are shown in figure 1. The wheels 2, 3 are situated concentrically on a common rotation centre line R. The distance between the wheels 2, 3, also called track width A, in this example is approximately eighty centimetres. The track width A means the middles M1 and M2 of the widths of the first wheel 2 and the second wheel 3, respectively, as schematically shown in figure 1. The braking system 5 is fixedly connected to the chassis 10 between the two wheels 2, 3 and in a manner to be further described adapted for decelerating the rotations of the wheels 2, 3.

The go-kart 1 is furthermore provided with a seat that is not further shown for supporting a driver on the chassis 10, a steerage that is not shown for steering the wheels that are not shown at the front of the go-kart 1 and a pedal drive that is not shown for moving the go-kart 1.

The first wheel 2 is provided with a first wheel rim 21, and a first circumferential rubber tyre 22 laid around the first wheel rim 21, and a first hub 23 situated concentrically in the first wheel rim 21. The first wheel 2 further comprises a first brake disc 20 that is rotation-fixedly connected to the first hub 23 at a first bridging distance D from the middle M1 of the first wheel 2.

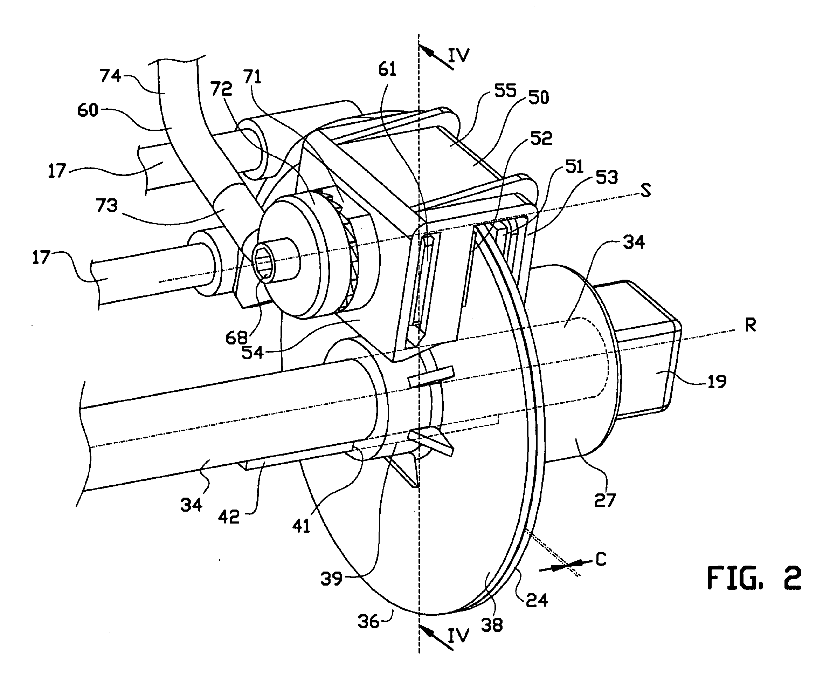

As shown in figures 2-4 the first steel brake disc 20 is provided with a first disc section 24 having a first brake surface 25 and a second brake surface 26. The first brake disc 20 comprises a cylindrical bush 27 that is concentrically upright from the second brake surface 26 and defines a passage 28 in the disc section 24 and on the side of the second brake surface 26 forms an accommodation space 29. In the accommodation space 29 a first rotation bearing 18 is accommodated with a rotation centre line that coincides with the rotation centre line R. At its end that faces away from the second brake surface 26, the cylindrical bush 27 merges into a block-shaped locking tappet 19 with which the first brake disc 20 is rotation-fixedly connected to the first hub 23 of the first wheel 2.

As shown in figure 1 the second wheel 3 is provided with a second wheel rim 31, a second circumferential rubber tyre 32 laid around the second wheel rim 31, and a second hub 33 situated concentrically in the second wheel rim 31. The second wheel 3 further comprises a driving shaft 34 situated in the rotation centre line R which shaft is rotation-fixedly connected to the second hub 33. The driving shaft 34 extends from the second hub 33 of the second wheel 3 over a second bridging distance B in the direction of the first wheel 2 and in this example is bearing mounted to the chassis 10 so as to be rotatable about the rotation centre line R on two positions along its length via two second rotation bearings 16.

The second wheel 3 is provided with a toothed wheel 35 which, between the first wheel 2 and the second wheel 3, is rotation-fixedly connected to the driving shaft 34. The go-kart 1 is provided with a drive chain 12 of a pedal drive that is not further shown and that engages onto the teeth of the toothed wheel 35 so as to circulate. The drive chain 12 transmits the driving motion of the pedal drive to the driving shaft 34 via the toothed wheel 35. The second wheel 3 will as a result of the transmitted driving motion be rotatingly driven about the rotation centre line R, as a result of which the go-kart 1 can be moved in either a forward or a rearward driving direction.

At the second bridging distance B from the second hub 33, the second wheel 3 is provided with a second steel brake disc 30 near the outer end of the driving shaft 34 which end faces away from the second hub 33. As shown in figures 2-4 the second brake disc 30 is provided with a disc section 36 having a third brake surface 37 and a fourth brake surface 38. The third brake surface 37 of the second brake disc 3 is oriented to the first brake surface 25 of the first brake disc 2 and situated therefrom at a very short brake disc distance C of only a few millimetres. The brake disc distance C just suffices to allow free rotation of the first brake disc 20 with respect to the second brake disc 30 in the undecelerated condition. The second brake disc 30 comprises a cylindrical bush 39 that is concentrically upright from the second brake surface 37, which bush defines a through-going insertion opening or passage 40 for the driving shaft 34. In the interior circumferential surface the bush 39 is provided with a recess 41 for receiving a key 42 that is disposed on the driving shaft 34. The key 42 provides a rotation-fixed coupling of the driving shaft 34 in the bush 39 of the second brake disc 30.

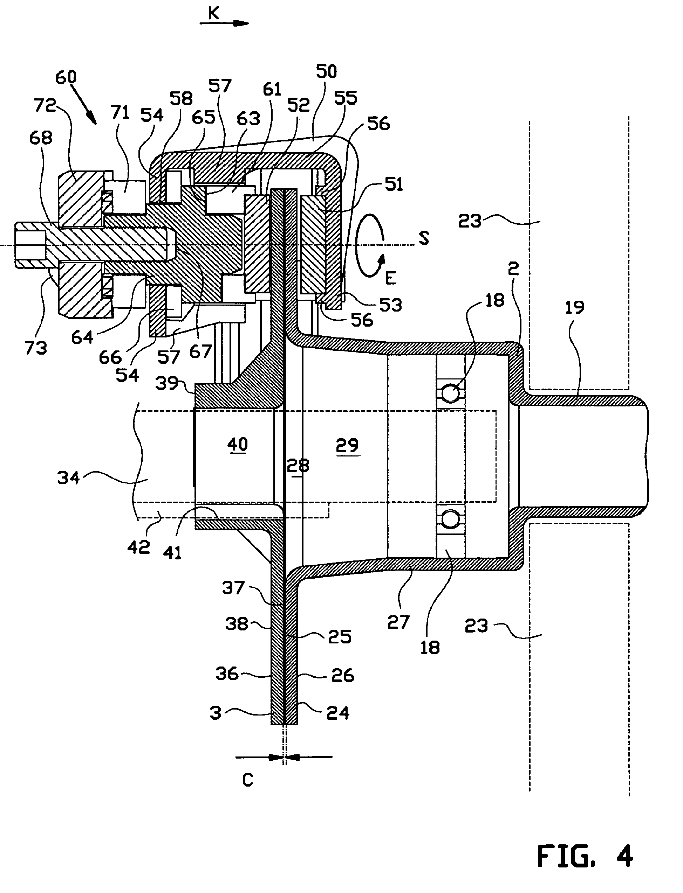

As shown in figure 4 the driving shaft 34, considered from the second hub 33, extends through the passage 40 past the second brake disc 30 into the accommodation space 29 of the first brake disc 20. In the accommodation space 29 the driving shaft 34 is bearing mounted in the first brake disc 20 so as to be rotatable about the rotation centre line R, which means that the first wheel 2 is bearing mounted so as to be rotatable about the rotation centre line R on the outer end of the driving shaft 34, which outer end faces away from the second hub 33. The first wheel 2 is able to rotate independently of or freely around the driving shaft 34 in the undecelerated condition. As a result the wheels 2, 3 are able to rotate mutually at different rotation speeds, for instance when the go-kart negotiates a bend wherein the wheel on the inside of the bend rotates less fast than the wheel on the outside of the bend.

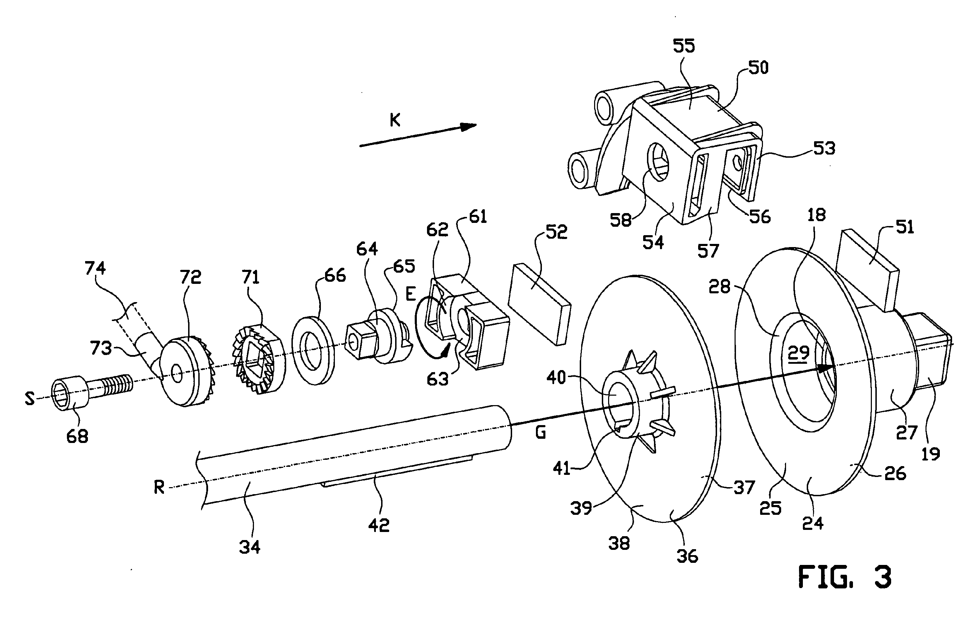

As shown in figures 3 and 4, the braking system 5 is provided with a brake calliper 50 for accommodating at least a part of both brake discs 20, 30 therein.

The brake calliper 50 is provided with a first brake pad 51, a second brake pad 52 and a control assembly 60. The brake pads 51, 52 may, despite the name given to them, also have other shapes besides a block shape, as long as there is question of a surface that can be brought into abutting contact with the brake discs 20, 30 in order to perform the braking function. The brake calliper 50 is fixedly connected to the chassis 10 by means of bolts 17. The brake calliper 50 comprises a first calliper member 53 and a second a calliper member 54 positioned parallel to and spaced apart from the first calliper member 53, which are rigidly connected to each other by means of a connecting wall 55. The first calliper member 53, the second calliper member 54 and the connecting wall 55 form an inverted U-shaped cross-section with an inner space.

The brake discs 20, 30 with their disc sections 24, 36 are able to move freely through the inner space in undecelerated condition. The first calliper member 53 is provided with a first holder 56 for retaining the first brake pad 51 therein. The second calliper member 54 is provided with a second holder 57 for retaining the second brake pad 52 therein spaced apart from the first brake pad 51. The first brake disc 24 and the second brake disc 36 extend between the first calliper member 53 and the second calliper member 54, wherein the first brake pad 51 and the second brake pad 52 are situated opposite the second brake surface 26 and the fourth brake surface 38, respectively. The second brake pad 52 is able to move with respect to the brake calliper 50 in a clamping direction K, perpendicular to the disc sections 24, 36. The second calliper member 54 is provided with an opening 58 through which the control assembly 60 engages onto the second brake pad 52 in order to be able to move it with respect to the first brake pad 51 in the clamping direction K.

As shown in figures 3 and 4 the control assembly 60 is provided with a press-on block 61 that is placed in the second holder 57 of the brake calliper 50 against the side of the second brake pad 52 which side faces away from the first brake pad 51. Due to the exterior dimensions, the press-on block 61 is fittingly accommodated within the dimensions of the second holder 57 and can only slide together with the second brake pad 52 in the clamping direction K. On the side facing away from the second brake pad 52 the press-on block 61 is provided with a cylindrical recess 62. In the cylindrical recess 62 a circular first glide surface 63 extends over one revolution in a circumferential direction E about the control centre line S. During the one revolution the first glide surface 63 follows a certain helical line as a result of which the first glide surface 63 in a circulating manner helically traverses a distance in the clamping direction K.

The control assembly 60 is furthermore provided with a press-on cylinder 64 placed in the brake calliper 50 between the press-on block 61 and the second calliper member 54. The press-on cylinder 64 is disposed to abut the second calliper member 54 so as to rotate about the control centre line S by means of a radial bearing 66. On the side facing the first press-on block 61, the press-on cylinder 64 is provided with a second glide surface 65 that is formed complementarily to the first glide surface 63 and abuts the first glide surface 63.

On the side facing away from the press-on block 61 the press-on cylinder 64 is provided with a threaded opening 67 for attaching a fastening bolt 68 therein. The control assembly 60 is provided with a first serrated adjustment part 71 and a second serrated adjustment part 72 that can be adjusted with respect to each other at a control angle to be set. The serrated adjustment parts 71, 72 are connected to the press-on cylinder 64 by means of the fastening bolt 68. The second serrated adjustment part 72 is provided with a first brake lever member 73 extending radially with respect to the control centre line S and merging into the second brake lever member 74 extending upwardly up to the vicinity of the seat that is not shown on the chassis 10, within reach of the driver who will be sitting on the seat. At the outer end the second brake lever member 74 is provided with a control knob 75 which together with the first brake lever member 73 and the second brake lever member 74 forms the brake lever 76.

Via the brake lever 76 the driver is able to rotate the control assembly 60 about the control centre line S in a first control direction T and a second control direction U. In such a rotation the second glide surface 65 of the press-on cylinder 64 rotates with respect to the first glide surface 63 of the press-on block 61. Because of the helical shape of both glide surfaces 63, 65 the press-on block 61 traverses a certain distance in the clamping direction K with respect to the press-on cylinder 64, which in turn is stopped by the second calliper member 54. The rotary motions of the brake lever 76 in the first control direction T or the second control direction U are converted by the glide surfaces 63, 65 in the manner described above into a translatory motion of the press-on cylinder 64 and the press-on block 61 in the clamping direction K. In that way the distance between the brake pads 51, 52 is reduced.

If the distance between the brake pads 51, 52 is reduced sufficiently, the first brake pad 51 and the second brake pad 52 will contact the second brake surface 26 of the first brake disc 20 and the fourth brake surface 38 of the second brake pad 30, respectively, situated in between. If sufficient clamping force in the clamping direction K is exerted on the first brake pad 51, the brake disc distance C will also be reduced such that first brake surface 25 and the third brake surface 37 will be brought into mutually clamping abutting contact. In that way a clawing engagement or a clamping abutting contact between successively the first brake pad 51, the first brake disc section 24, the second brake disc section 36 and the second brake pad 52 is created. Depending on the clamping force a frictional resistance is created between each of the abutting contacts, in which way the rotation speed of the first brake disc 20 and the second brake disc 30 about the rotation centre line R can be decelerated. Finally the first brake disc 20 and the second brake disc 30 can even be brought to a complete standstill with respect to the braking system 5.

In case of sufficient press-on force in the direction K the brake discs 20, 30 are able to move towards each other within certain play, wherein the first brake surface 25 and the third brake surface 37 can come into clamping abutting contact with each other. In case of sufficient mutual resistance the brake discs 20, 30 will be able to act like a brake disc assembly rotation-fixedly connected to each other by means of the frictional resistance, which assembly on the second and fourth brake surfaces 26, 38 facing the brake pads 51, 52 can be decelerated by means of the two brake pads 51, 52.

The braking system 5 according to the invention described above makes it possible to bridge the second bridging distance B by means of the driving shaft 34 in order to support the second brake disc 30 on the side of the go-kart 1 situated opposite the second wheel 3, in the vicinity of or at a short distance from the first wheel 2. The brake discs 20, 30 are both situated on the side of the toothed wheel 35 that faces away from the second wheel 3 and the drive chain 12 of the pedal drive that engages onto the toothed wheel. In particular the first brake disc 20 and the second brake disc 30 are placed together as a group at a short brake disc distance C of a few millimetres to less than one millimetre. The first brake disc 20 and the second brake disc 30 placed in a group, are situated in the area between the middle of the track width A and the first hub 23. Considered from the second wheel 3 the first brake disc 20 and the second brake disc 30 placed in a group, are situated off-centre past halfway the track width A, wherein the distance from the second brake disc 30 to the first hub 23 is shorter than the distance from the second brake disc 30 to the second hub 33.

In that way it is possible on one side of the go-kart 1 to effect a simultaneous deceleration of the first brake disc 20 and the second brake disc 30 situated within the reach of the braking system 5, by means of a braking system having only one brake calliper 50 and two brake pads 51, 52 accommodated therein.

The go-kart 1 according to the invention has the advantage that the first brake disc 20 and the second brake disc 30 placed together in a group can almost be simultaneously engaged by the braking system 5 that is simplified as compared to the state of the art and the simplified control assembly 60.

The above description is included to illustrate the operation of preferred embodiments of the invention and not to limit the scope of the invention. Starting from the above explanation many variations that fall within the spirit and scope of the present invention will be evident to an expert.

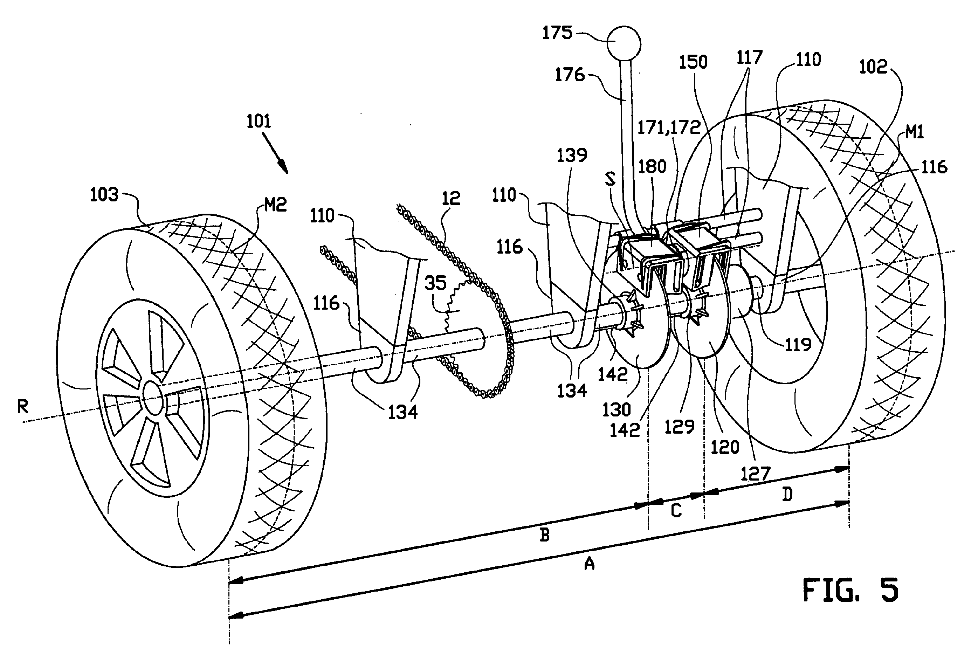

For instance figure 5 shows an alternative embodiment of the go-kart 101 according to the invention. The alternative go-kart 101 just like the embodiment of the go-kart 1 described above is provided with a first wheel 102 and a second wheel 103 having a common rotation centre line R. The alternative go-kart 101 differs from the go-kart 1 described above in that it comprises an alternative braking system 105, an alternative control assembly 160 and an alternative first brake disc 120.

The alternative braking system 105 is provided with a first brake calliper 150 and a second brake calliper 180. The first brake calliper 150 can be compared to the brake calliper 50 of the go-kart 1 described above and with the brake pads accommodated therein engages onto the alternative first brake disc 120 of the first wheel 102. The second brake calliper 180 is mirrored to the first brake calliper 150 and with the brake pads accommodated therein at a short distance from the first brake calliper 150 engages onto the second brake disc 130 of the second wheel 103. The brake discs 120, 130 are situated next to each other at a brake disc distance C of approximately fifteen centimetres. With respect to the track width A there is question of brake discs 120, 130 situated next to each other at a short distance.

The alternative control assembly 160 is accommodated between the first brake calliper 150 and the second brake calliper 180 and functions in a comparable manner to the control assembly 60 in order to change the intermediate distance between the brake pads accommodated in the first brake calliper 150. The alternative control assembly 160 differs from the control assembly 60 in that it comprises a second assembly of a press-on cylinder and a press-on block for in the manner described above engaging onto the brake pads accommodated in the second brake calliper 180.

The alternative first brake disc 120 just like the first brake pad 20 is provided with a first bush 127. The alternative first brake disc 120 differs from the first brake disc 20 in that the first bush 127 merges into a rotation axis 119 bridging the first bridging distance D to the first hub 23. The rotation axis 119 bridges a part of the track width A, as a result of which the second bridging distance B the driving shaft 134 has to bridge can be reduced. The driving shaft 134 is shortened accordingly, wherein the toothed wheel 35 and the position where the drive chain 12 engages onto the toothed wheel 35 have shifted in the direction of the second wheel 103. The brake discs 120, 130 placed in a group of the alternative go-kart 101 shift with respect to the brake discs 20, 30 of the go-kart 1 in the direction of the middle of the track width A. The brake discs 120, 130, however, are still situated on the side of the toothed wheel 35 that faces away from the second wheel 103. In order to be able to bearing mount the rotation axis 119 firmly to the chassis 110, the alternative go-kart 101 is provided with an extra bearing 116 that bearing mounts the rotation axis 119 to the chassis 110 between the alternative braking system 105 and the first wheel 102.

In order to further lengthen the rotation axis 119 and proportionally shorten the driving shaft 134 further, the positions of braking system and the brake discs placed in a group can in a further alternative embodiment that is not shown be shifted further in the direction of the second hub, for instance in the middle between the two hubs of the two wheels.

The embodiments described above, have been described in relation to the rear wheels and the rear side of the go-kart. In an alternative embodiment that is not shown, the braking system according to the invention can also be used on the front wheels of a go-kart. In that case for instance a position of the brake discs placed in a group, in the middle of the track width may be advantageous, because the control element can then easily be brought from the front side, for instance past the steering column of the steerage within reach of the driver, for instance with a brake lever next to the steering wheel.

Summarising the invention relates to a vehicle 1, 101 comprising a first wheel 2, 102, a second wheel 3, 103, a chassis 10, 110, a braking system 5, 105 and a drive situated between the first wheel 2, 102 and the second wheel 3, 103 for driving the second wheel 3, 103, wherein the first wheel 2, 102 and the second wheel 3, 103 are bearing mounted to the chassis 10, 110 so as to be rotatable about a common rotation centre line R, wherein the first wheel 2, 102 is provided with a first hub 23, 123 and a first brake disc 20, 120 rotation-fixedly coupled to the first hub 23, 123, wherein the second wheel 3, 103 is provided with a second hub 33, 133 and a second brake disc 30, 130 rotation-fixedly coupled to the second hub 33, 133, wherein the first brake disc 20, 120 and the second brake disc 30, 130 are both situated on the side of the drive that faces away from the second wheel 3, 103.

## Claims

1. Vehicle comprising a first wheel, a second wheel, a chassis, a braking system fixedly connected to the chassis and a drive situated between the first wheel and the second wheel for driving the second wheel, wherein the first wheel and the second wheel are bearing mounted to the chassis so as to be rotatable about a common rotation centre line, wherein the first wheel is provided with a first hub and first brake disc rotation-fixedly coupled to the first hub, wherein the second wheel is provided with a second hub and a second brake disc rotation-fixedly coupled to the second hub, wherein the braking system is provided with brake pads which in a first position are substantially free from the brake discs in order to allow rotations of the brake discs, wherein in a second position the brake pads clampingly engage onto the first brake disc and the second brake disc in order to slow down the rotations of the brake discs with respect to the chassis, wherein the first brake disc and the second brake disc are both situated on one side of the drive.

2. Vehicle according to claim 1, wherein the first brake disc and the second brake disc are both situated on the side of the drive that faces away from the second wheel.

3. Vehicle according to claim 1 or 2, wherein the first brake disc and the second brake disc are situated next to each other.

4. Vehicle according to any one of the preceding claims, wherein the first brake disc and the second brake disc are directly consecutive to each other.

5. Vehicle according to any one of the preceding claims, wherein the first wheel and the second wheel define a mutual track width, wherein the brake disc distance is at least three times smaller, preferably at least five times smaller and most preferably at least ten times smaller than the track width.

6. Vehicle according to any one of the preceding claims, wherein the brake disc distance preferably is smaller than one centimetre.

7. Vehicle according to any one of the preceding claims, wherein the braking system comprises a brake calliper, wherein the brake pads are spaced apart from one another within the brake calliper, wherein the first brake disc and the second brake disc are situated between the brake pads.

8. Vehicle according to any one of the preceding claims, wherein in the second position the first brake pad clampingly abuts the side of the first brake disc, which side faces away from the second brake disc, and wherein in the second position the second brake pad clampingly abuts the side of the second brake disc, which side faces away from the first brake disc.

9. Vehicle according to any one of the preceding claims, wherein on the sides that face away from the brake pads, the brake discs are in mutual clamping abutment.

10. Vehicle according to any one of the preceding claims, wherein the first brake disc and the second brake disc are situated in a group in the middle between the two wheels.

11. Vehicle according to any one of the claims 1-9, wherein the first brake disc and the second brake disc are situated in a group in the area between the middle between the two wheels and the first hub, wherein the first brake disc and the second brake disc preferably are situated at a short distance from the first hub.

12. Vehicle according to claim 11, wherein the second wheel comprises a shaft that is rotation-fixedly connected to the second hub which shaft, considered from the second hub, extends past the middle between the two wheels, wherein the second brake disc is rotation-fixedly connected to the shaft at a distance from the first hub that is smaller than the distance to the second hub, wherein the shaft preferably extends from the second hub to the first wheel and the first wheel is bearing mounted to the shaft, wherein the first brake disc preferably is provided with a concentric recess with a bearing in there for bearing mounting the first brake disc to the shaft.

13. Vehicle according to any one of the preceding claims, wherein in the condition in which the braking system is not slowing down, the first wheel and the second wheel are independently rotatable with respect to each other.

14. Vehicle according to any one of the preceding claims, wherein the vehicle has at least three wheels.

15. Vehicle comprising a first front wheel, a second front wheel, a chassis and a braking system fixedly connected to the chassis, wherein the first front wheel and the second front wheel are bearing mounted to the chassis so as to be rotatable about a common rotation centre line, wherein the first front wheel is provided with a first hub and first brake disc rotation-fixedly coupled to the first hub, wherein the second front wheel is provided with a second hub and a second brake disc rotation-fixedly coupled to the second hub, wherein the braking system is provided with brake pads which in a first position are substantially free from the brake discs in order to allow rotations of the brake discs, wherein in a second position the brake pads clampingly engage onto the first brake disc and the second brake disc in order to slow down the rotations of the brake discs with respect to the chassis, wherein the first front wheel and the second front wheel define a mutual track width, wherein the first brake disc and the second brake disc are situated next to each other as a group in the middle of the track width.

## Patentansprüche

1. Fahrzeug mit einem ersten Rad, einem zweiten Rad, einem Fahrgestell, einem Bremssystem, welches fest mit dem Fahrgestell verbunden ist, und einem Antrieb, der zwischen dem ersten Rad und dem zweiten Rad zum Antreiben des zweiten Rades angeordnet ist, wobei das erste Rad und zweite Rad an dem Fahrgestell so gelagert sind, dass diese um eine gemeinsame Rotationsachse drehbar sind, wobei das erste Rad eine erste Nabe und eine erste Bremsscheibe aufweist, die drehfest mit der ersten Nabe verbunden ist, wobei das zweite Rad eine zweite Nabe und eine zweite Bremsscheibe aufweist, die drehfest mit der zweiten Nabe verbunden ist, wobei das Bremssystem Bremsbeläge aufweist, die in einer ersten Position im Wesentlichen nicht in Kontakt mit den Bremsscheiben kommen, um Drehungen der Bremsscheiben zu ermöglichen, wobei die Bremsbeläge in einer zweiten Position klemmend mit der ersten Bremsscheibe und der zweiten Bremsscheibe in Kontakt kommen, um die Drehungen der Bremsscheiben in Bezug auf das Fahrgestell zu verlangsamen, wobei sowohl die erste Bremsscheibe als auch die zweite Bremsscheibe auf einer Seite des Antriebs angeordnet sind.

2. Fahrzeug nach Anspruch 1, bei dem sowohl die erste Bremsscheibe als auch die zweite Bremsscheibe auf der Seite des Antriebs angeordnet sind, welche abgewandt zum zweiten Rad angeordnet ist.

3. Fahrzeug nach Anspruch 1 oder 2, bei dem die erste Bremsscheibe und die zweite Bremsscheibe benachbart zueinander angeordnet sind.

4. Fahrzeug nach einem der vorhergehenden Ansprüche, bei dem die erste Bremsscheibe und die zweite Bremsscheibe direkt aufeinanderfolgend angeordnet sind.

5. Fahrzeug nach einem der vorhergehenden Ansprüche, bei dem das erste Rad und das zweite Rad eine gemeinsame Spurbreite festlegen, wobei der Bremsscheibenabstand mindestens drei Mal kleiner, bevorzugt mindestens fünf Mal kleiner und weiter bevorzugt mindestens zehn Mal kleiner als die Spurbreite ist.

6. Fahrzeug nach einem der vorhergehenden Ansprüche, bei dem der Bremsscheibenabstand bevorzugt kleiner als 1 cm ist.

7. Fahrzeug nach einem der vorhergehenden Ansprüche, bei dem das Bremssystem einen Bremssattel aufweist, wobei die Bremsbeläge innerhalb des Bremssattels zueinander beabstandet angeordnet sind, und die erste Bremsscheibe und die zweite Bremsscheibe zwischen den Bremsbelägen angeordnet sind.

8. Fahrzeug nach einem der vorhergehenden Ansprüche, bei dem in der zweiten Position der erste Bremsbelag klemmend gegen die Seite der ersten Bremsscheibe stößt, die von der zweiten Bremsscheibe abgewandt angeordnet ist, und bei dem in der zweiten Position der zweite Bremsbelag klemmend gegen die Seite der zweiten Bremsscheibe stößt, die abgewandt zur ersten Bremsscheibe angeordnet ist.

9. Fahrzeug nach einem der vorhergehenden Ansprüche, bei dem an den Seiten, welche von den Bremsbelägen abgewandt sind, die Bremsscheiben in gegenseitigem Klemmanschlag sind.

10. Fahrzeug nach einem der vorhergehenden Ansprüche, bei dem die erste Bremsscheibe und die zweite Bremsscheibe in einer Gruppe in der Mitte zwischen den zwei Rädern angeordnet sind.

11. Fahrzeug nach einem der Ansprüche 1 bis 9, bei dem die erste Bremsscheibe und die zweite Bremsscheibe in einer Gruppe in dem Bereich zwischen der Mitte zwischen den zwei Rädern und der ersten Nabe angeordnet sind, wobei die erste Bremsscheibe und die zweite Bremsscheibe bevorzugt mit einem geringen Abstand von der ersten Nabe angeordnet sind.

12. Fahrzeug nach Anspruch 11, bei dem das zweite Rad eine Welle aufweist, die drehfest mit der zweiten Nabe verbunden ist, wobei die Welle, von der zweiten Nabe aus betrachtet, sich über die Mitte zwischen den zwei Rädern erstreckt, wobei die zweite Bremsscheibe drehfest mit der Welle mit einem Abstand von der ersten Nabe, der geringer als der Abstand zu der zweiten Nabe ist, verbunden ist, wobei die Welle sich bevorzugt von der zweiten Nabe bis zum ersten Rad erstreckt und das erste Rad an der Welle gelagert ist, wobei die erste Bremsscheibe bevorzugt mit einer konzentrischen Aussparung versehen ist, in der ein Lager zum Lagern der ersten Bremsscheibe auf der Welle angeordnet ist.

13. Fahrzeug nach einem der vorhergehenden Ansprüche, wobei in dem Zustand, bei dem das Bremssystem sich nicht verlangsamt, das erste Rad und das zweite Rad unabhängig voneinander rotierbar sind.

14. Fahrzeug nach einem der vorhergehenden Ansprüche, bei dem das Fahrzeug mindestens drei Räder aufweist.

15. Fahrzeug mit einem ersten Vorderrad, einem zweiten Vorderrad, einem Fahrgestell und einem Bremssystem, welches fest mit dem Fahrgestell verbunden ist, wobei das erste Vorderrad und das zweite Vorderrad an dem Fahrgestell so gelagert sind, dass diese um eine gemeinsame Rotationsachse drehbar sind, wobei das erste Vorderrad mit einer ersten Nabe und einer ersten Bremsscheibe versehen ist, die drehfest mit der ersten Nabe verbunden ist, wobei das zweite Vorderrad mit einer zweiten Nabe und einer zweiten Bremsscheibe versehen ist, die mit der zweiten Nabe drehfest verbunden ist, wobei das Bremssystem Bremsbeläge aufweist, welche in einer ersten Position im Wesentlichen nicht in Kontakt mit den Bremsscheiben sind, um eine Rotation der Bremsscheiben zu ermöglichen, wobei die Bremsbeläge in einer zweiten Position klemmend mit der ersten Bremsscheibe und der zweiten Bremsscheibe in Kontakt sind, um die Rotationen der Bremsscheiben in Bezug auf das Fahrgestell zu verlangsamen, wobei das erste Vorderrad und das zweite Vorderrad eine gemeinsame Spurbreite festlegen, wobei die erste Bremsscheibe und die zweite Bremsscheibe benachbart zueinander als eine Gruppe in der Mitte der Spurbreite angeordnet sind.

## Revendications

1. Véhicule comprenant une première roue, une seconde roue, un châssis, un système de freinage raccordé de manière fixe au châssis et un entraînement situé entre la première roue et la seconde roue pour entraîner la seconde roue, dans lequel la première roue et la seconde roue sont montées par palier sur le châssis afin de pouvoir tourner autour d'un axe de rotation central commun, dans lequel la première roue est prévue avec un premier moyeu et un premier disque de frein couplé de manière fixe en rotation au premier moyeu, dans lequel la seconde roue est prévue avec un second moyeu et un second disque de frein couplé de manière fixe en rotation au second moyeu, dans lequel le système de freinage est prévu avec des plaquettes de frein qui, dans une première position, sont sensiblement dégagées des disques de frein afin de permettre les rotations des disques de frein, dans lequel dans une seconde position, les plaquettes de frein se mettent en prise avec serrage sur le premier disque de frein et le second disque de frein afin de ralentir les rotations des disques de frein par rapport au châssis, dans lequel le premier disque de frein et le second disque de frein sont tous deux situés d'un côté de l'entraînement.

2. Véhicule selon la revendication 1, dans lequel le premier disque de frein et le second disque de frein sont tous deux situés du côté de l'entraînement qui est orienté à l'opposé de la seconde roue.

3. Véhicule selon la revendication 1 ou 2, dans lequel le premier disque de frein et le second disque de frein sont situés l'un à côté de l'autre.

4. Véhicule selon l'une quelconque des revendications précédentes, dans lequel le premier disque de frein et le second disque de frein sont directement consécutifs l'un par rapport à l'autre.

5. Véhicule selon l'une quelconque des revendications précédentes, dans lequel la première roue et la seconde roue définissent une largeur de piste mutuelle, dans lequel la distance de disque de frein est au moins trois fois plus petite, de préférence au moins cinq fois plus petite et de préférence au moins dix fois plus petite que la largeur de piste.

6. Véhicule selon l'une quelconque des revendications précédentes, dans lequel la distance de disque de frein est, de préférence, inférieure à un centimètre.

7. Véhicule selon l'une quelconque des revendications précédentes, dans lequel le système de freinage comprend un étrier de frein, dans lequel les plaquettes de frein sont espacées l'une de l'autre à l'intérieur de l'étrier de frein, dans lequel le premier disque de frein et le second disque de frein sont situés entre les plaquettes de frein.

8. Véhicule selon l'une quelconque des revendications précédentes, dans lequel, dans la seconde position, la première plaquette de frein vient en butée avec serrage contre le côté du premier disque de frein, lequel côté est orienté à l'opposé du second disque de frein, et dans lequel dans la seconde position, la seconde plaquette de frein vient en butée avec serrage contre le côté du second disque de frein, lequel côté est orienté à l'opposé du premier disque de frein.

9. Véhicule selon l'une quelconque des revendications précédentes, dans lequel, sur les côtés qui sont orientés à l'opposé des plaquettes de frein, les disques de frein sont en butée de serrage mutuelle.

10. Véhicule selon l'une quelconque des revendications précédentes, dans lequel le premier disque de frein et le second disque de frein sont situés dans un groupe au centre entre les deux roues.

11. Véhicule selon l'une quelconque des revendications 1 à 9, dans lequel le premier disque de frein et le second disque de frein sont situés dans un groupe dans la zone entre le centre entre les deux roues et le premier moyeu, dans lequel le premier disque de frein et le second disque de frein sont de préférence situés à une courte distance du premier moyeu.

12. Véhicule selon la revendication 11, dans lequel la seconde roue comprend un arbre qui est raccordé de manière fixe en rotation au second moyeu, lequel arbre, pris en considération à partir du second moyeu, s'étend au-delà du centre entre les deux roues, dans lequel le second disque de frein est raccordé de manière fixe en rotation à l'arbre à une distance du premier moyeu qui est inférieure à la distance jusqu'au second moyeu, dans lequel l'arbre s'étend de préférence du second moyeu à la première roue et la première roue est montée par palier sur l'arbre, dans lequel le premier disque de frein est de préférence prévu avec un évidement concentrique avec un palier dans ce dernier pour monter par palier le premier disque de frein sur l'arbre.

13. Véhicule selon l'une quelconque des revendications précédentes, dans lequel, dans la condition dans laquelle le système de freinage n'est pas ralenti, la première roue et la seconde roue peuvent tourner de manière indépendante l'une par rapport à l'autre.

14. Véhicule selon l'une quelconque des revendications précédentes, dans lequel le véhicule a au moins trois roues.

15. Véhicule comprenant une première roue, une seconde roue, un châssis et un système de freinage raccordé de manière fixe au châssis, dans lequel la première roue et la seconde roue sont montées par palier sur le châssis afin de pouvoir tourner autour d'un axe central de rotation commun, dans lequel la première roue avant est prévue avec un premier moyeu et le premier disque de frein couplé de manière fixe en rotation au premier moyeu, dans lequel la seconde roue avant est prévue avec un second moyeu et un second disque de frein couplé de manière fixe en rotation au second moyeu, dans lequel le système de freinage est prévu avec des plaquettes de frein qui, dans une première position, sont sensiblement dégagées des disques de frein afin de permettre les rotations des disques de frein, dans lequel, dans une seconde position, les plaquettes de frein se mettent en prise par serrage sur le premier disque de frein et le second disque de frein afin de ralentir les rotations des disques de frein par rapport au châssis, dans lequel la première roue avant et la seconde roue avant définissent une largeur de piste mutuelle, dans lequel le premier disque de frein et le second disque de frein sont situés l'un à côté de l'autre sous la forme d'un groupe au centre de la largeur de piste.
